# EUROPEAN PATENT SPECIFICATION

(11) **EP 3 633 887 B1**
(45) Date of publication and mention of the grant of the patent: **17.07.2024**
(21) Application number: 18809832.1
(22) Date of filing: 31.05.2018
(51) Int. Cl.: H04J 3/16

(54) **METHOD, APPARATUS FOR DELIVERING TRAFFIC FLOW IN FLEXIBLE ETHERNET PROTOCOL**
VERFAHREN, VORRICHTUNG ZUR BEREITSTELLUNG EINES VERKEHRSFLUSSES IN EINEM FLEXIBLEN ETHERNET-PROTOKOLL
PROCÉDÉ, DISPOSITIF POUR LIVRER UN FLUX DE TRAFFIC DANS UN PROTOCOLE ETHERNET FLEXIBLE

(30) Priority: 31.05.2017 CN 201710399609
(43) Date of publication of application: 08.04.2020
(73) Proprietor: ZTE Corporation, Shenzhen, Guangdong 518057 (CN)
(72) Inventor: LIU, Feng, Shenzhen Guangdong 518057 (CN)
(74) Representative: Tiburzi, Andrea
(86) International application number: PCT/CN2018/089243
(87) International publication number: WO 2018/219323

(56) References cited:
- CN-A- 101 605 354
- CN-A- 101 959 069
- CN-A- 106 411 454
- US-A1- 2011 013 619
- US-A1- 2013 044 756
- US-A1- 2017 005 949
- STEPHEN J. TROWBRIDGE; DAVID R. STAUFFER: "Flex Ethernet Implementation Agreement 1.0. IA # OIF-FLEXE-01.0", FLEX ETHERNET IMPLEMENTATION AGREEMENT 1.0. IA # OIF-FLEXE-01.0, 1 March 2016 (2016-03-01), US, pages 1 - 31, XP055509044

## Description

### TECHNICAL FIELD

The present disclosure relates to the field of communications, for example, to a method and apparatus for delivering a traffic flow in a Flex Ethernet protocol.

### BACKGROUND

The rapid increase of user network information traffic prompts the rapid increase of the delivery bandwidth of communication network information. The interface bandwidth speed of a communication device has been increased from 10M (unit: bit/second, the same in the following) to 100M, and then increased to 1G, 10G and 100G. A large number of 100G optical modules have been provided for commercial use on the market, and 400G optical modules have also been developed. However, a 400G optical module is more expensive than four 100G optical modules, which results in a lack of economic value in commercial use. Therefore, in order to deliver traffic of 400G on 100G optical modules, the International Organization for Standardization has defined the Flex Ethernet (FlexE) protocol. According to the FlexE protocol, multiple 100G optical modules are bundled to form one delivery channel with a higher speed. For example, according to the FlexE protocol, four 100G optical modules are bundled together and connected to a FlexE shim layer to form one 400G delivery channel having a delivery speed equivalent to the delivery speed of one 400G optical module. And under the condition that the cost is not increased, the delivery requirement of 400G traffic is met, and the economic value problem of traffic delivery is also solved.

When client traffic data is loaded on the FlexE shim layer for carrying, some control information blocks with idle bits are usually carried on the FlexE, which causes waste.

OIF-FLEXE-01.0 discloses Flex Ethernet Implementation Agreement 1.0.

US 2011/0013619 A1 discloses an apparatus comprising a switch fabric coupled to a plurality of interfaces.

US 2013/0044756 A1 discloses a system for TMD data transport over Ethernet interfaces.

### SUMMARY

The present application provides a method, apparatus and system for delivering a traffic flow in a Flex Ethernet protocol, which can improve the utilization rate of a delivery channel and thereby improve the traffic delivery efficiency.

The present invention is set out in the appended set of claims.

According to the embodiments of the present application, a part of client traffic flow is delivered by utilizing the control information block under the condition that the normal traffic delivery of the FlexE is not affected, so that the utilization rate of the delivery channel can be improved, and therefore the traffic delivery efficiency is improved.

Other features and advantages of the present application will be elaborated hereinafter in the description and, moreover, partially become apparent from the description, or will be understood through implementation of the present application. The object and other advantages of the present application may be implemented and obtained through structures set forth in the description, claims and drawings.

### BRIEF DESCRIPTION OF DRAWINGS

FIG. 1 is a schematic diagram of application of a FlexE protocol according to an embodiment of the present application;
FIG. 2 is a schematic diagram illustrating position arrangement of overhead blocks and data blocks in a FlexE protocol according to an embodiment of the present application;
FIG. 3 is a schematic diagram illustrating allocation of traffic over multiple physical channels in a FlexE protocol according to an embodiment of the present application;
FIG. 4 is a schematic diagram of a FlexE protocol carrying client traffic according to an embodiment of the present application;
FIG. 5 is a schematic diagram of inserting an idle information block into a FlexE layer according to an embodiment of the present application;
FIG. 6 is a schematic diagram illustrating a principle of 64/66 encoding for client traffic according to an embodiment of the present application;
FIG. 7 is a structural diagram of an idle information block according to an embodiment of the present application;
FIG. 8 is a flowchart of a method for delivering a traffic flow in a FlexE protocol according to an embodiment of the present application;
FIG. 9 is a flowchart of a method for delivering a traffic flow in a FlexE protocol according to another embodiment of the present application;
FIG. 10 is a schematic diagram of a sending end delivering a background client traffic flow through an idle information block according to an embodiment of the present application;
FIG. 11 is a schematic diagram of a receiving end recovering a background client traffic flow from an idle information block according to an embodiment of the present application;
FIG. 12 is a schematic diagram of delivering four background client traffic flows in idle information blocks according to an embodiment of the present application;
FIG. 13 is a schematic diagram of delivering a background client traffic flow in idle information blocks of a member according to an embodiment of the present application;
FIG. 14 is a schematic diagram of delivering a background client traffic flow in idle information blocks of a plurality of members according to an embodiment of the present application;
FIG. 15 is a schematic diagram of an apparatus for delivering a traffic flow in a FlexE protocol according to an embodiment of the present application;
FIG. 16 is a schematic diagram of an apparatus for delivering a traffic flow in a FlexE protocol according to another embodiment of the present application;
FIG. 17 is a schematic diagram of an apparatus for delivering a traffic flow in a FlexE protocol according to another embodiment of the present application;
FIG. 18 is a schematic diagram of an apparatus for delivering a traffic flow in a FlexE protocol according to another embodiment of the present application; and
FIG. 19 is a schematic diagram of a system for delivering a traffic flow in a FlexE protocol.

### DETAILED DESCRIPTION

Embodiments of the present application will be described below in detail with reference to the drawings.

The steps shown in the flowchart among the drawings may be performed by a computer system such as a group of computers capable of executing instructions. Although logical sequences are shown in the flowchart, the shown or described steps may be performed in sequences different from those described herein in some cases.

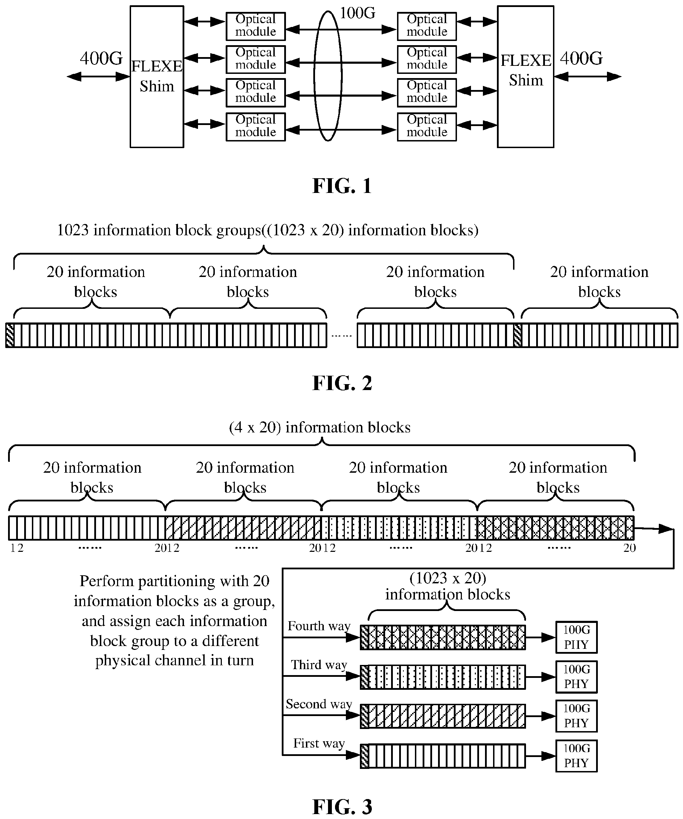

FIG. 1 is a schematic diagram of application of a FlexE protocol according to an embodiment of the present application. In FIG. 1, a FlexE shim layer and four 100G optical modules on the left may be regarded as a sending end, and four 100G optical modules and a FlexE shim layer on the right may be regarded as a receiving end. Due to the fact that a client traffic flow selects the fixed number of timeslots on a FlexE, the client traffic flow is a rigid pipeline. When the client flow become smaller, since the client traffic flow monopolizes the timeslots on the FlexE shim layer, an idle information block is inserted for adapting the speed, so that a utilization rate of a delivery channel is low, and waste is caused.

Firstly, the FlexE protocol is simply introduced.

A physical layer defined by the FlexE protocol has a rate of 100G. In an optical module, 64/66 encoding is performed on a 100G data packet before the 100G data packet is sent. That is, a 64-bit data is extended into a 66-bit information block. The added 2 bits are located in the front of the 66-bit information block and serve as a starting flag of the 66-bit information block. Then, the 100G data packet is sent out from an optical port in the form of the 66-bit information block. In the receiving process, the optical port identifies the 66-bit information block from the received data flow, recovers the original 64-bit data from the 66-bit information block, and reassembles the data packet.

The FlexE protocol is located on a layer where 64-bit data is converted to the 66-bit information block, and the 66-bit information blocks are sorted and planned before the 66-bit information blocks are sent. As shown in FIG. 2, for traffic with a 100G bandwidth, each twenty 66-bit information blocks are divided into one information block group, and each 66-bit information block represents one timeslot. That is, twenty timeslots are included in one information block group, and each timeslot represents the traffic speed of a 5G bandwidth. When the 66-bit information blocks are sent, one FlexE overhead block (a block filled with diagonal lines as shown in FIG. 2) is inserted each time after the 1023 information block groups ((1023 x 20) information blocks) are sent out. After one overhead block is inserted, the information blocks continue being sent. After the second group of (1023 x 20) information blocks are sent out, another overhead block is inserted. This operation is repeated in the same manner. In this way, in the process of sending information blocks, the overhead blocks are periodically inserted. The interval between two adjacent overhead blocks is (1023 x 20) information blocks.

When four ways of 100G physical layers are bundled into one logical traffic of 400G bandwidth, as shown in FIG. 3, partitioning is performed between information block groups (each group having 20 information blocks), and each information block group is assigned to a different physical channel in turn. For example, as shown in FIG. 3, four information block groups are respectively assigned to four ways of 100G physical layers. On each physical layer, sending is performed in a manner that each 20 information blocks form an information block group and one overhead block is inserted each 1023 information block groups. The overhead block plays a role of positioning, four members (each 100G physical layer may be referred to as one member) are positioned and sorted by using the overhead block as a reference to recover the traffic. In the FlexE shim layer, four ways of 20 information blocks are combined into a information block group formed by 80 information blocks, and the information block group has 80 timeslots. The client traffic is delivered in the 80 timeslots. Each timeslot has a bandwidth of 5G, and the total traffic delivery bandwidth is 400G.

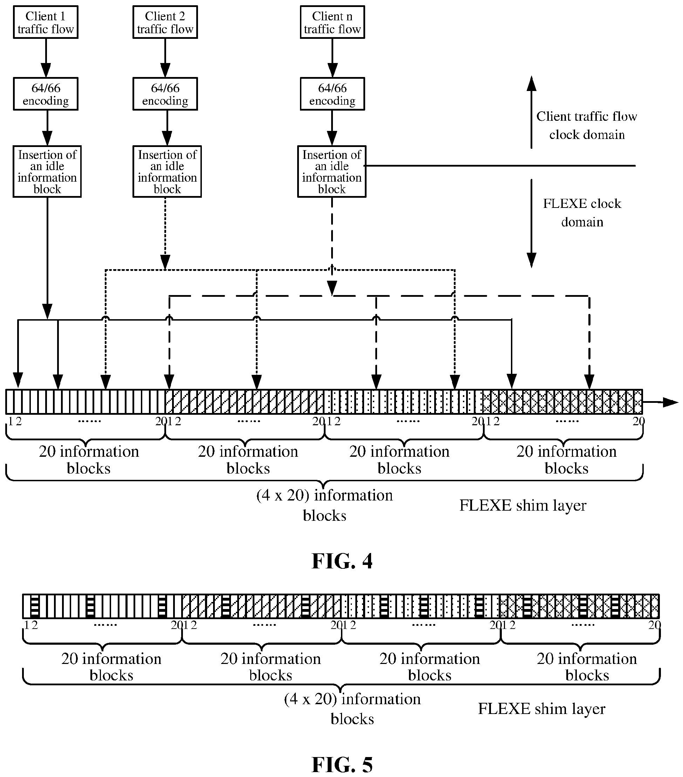

The process of carrying the client traffic by the FlexE protocol is as follows. Firstly 64/66 encoding is performed on the client traffic, and as shown in FIG. 4, and 64/66 encoding is performed on the traffic flows of the clients 1 to n respectively. After 64/66 encoding is performed, the traffic rate may be adapted, and the idle information blocks are inserted to ensure that the adapted speed is matched with the carrying speed of the FlexE. It is determined in which timeslots each client traffic flow is carried in the FlexE shim layer. If the client traffic flow is carried by one timeslot, the carrying speed is 5G (bit/s). If the client traffic flow is carried by m timeslots, the carrying speed is m multiplied by 5G. After the number of timeslots and the positions of timeslots for carrying are determined, an adapted traffic flow is inserted into a corresponding position in the FlexE shim layer to be sent out.

The client traffic flow may not be continuous, but may be divided into segments, for example, client traffic is Ethernet packets separated one by one and a space exists between the packets. Therefore, after 64/66 encoding is performed, the traffic flow is divided into segments of data flow, and the starting position and termination of the traffic flow may be determined. After the 64/66 encoding is performed, an idle information block may be inserted between each segment of data flow, the idle information block having a speed adaptation function. When the client traffic flow has a high speed, fewer idle information blocks are inserted. When the client traffic flow has a low speed, more idle information blocks are inserted. Thus, after the idle information blocks are inserted, the speed of the traffic flow is ensured to completely accord with the carrying speed requirement of the FlexE shim layer, and the client traffic flow is sent out from the FlexE shim layer.

Since the idle information blocks are inserted into the client traffic flow, in the FlexE shim layer, the idle information blocks, not the real effective date, are carried at some timeslot positions. As shown in FIG. 5, the blocks filled with the transverse lines are the idle information blocks. The lower the speed of client traffic is, the more idle information blocks are. The FlexE shim layer carries the idle information blocks, which is actually a loss (or waste).

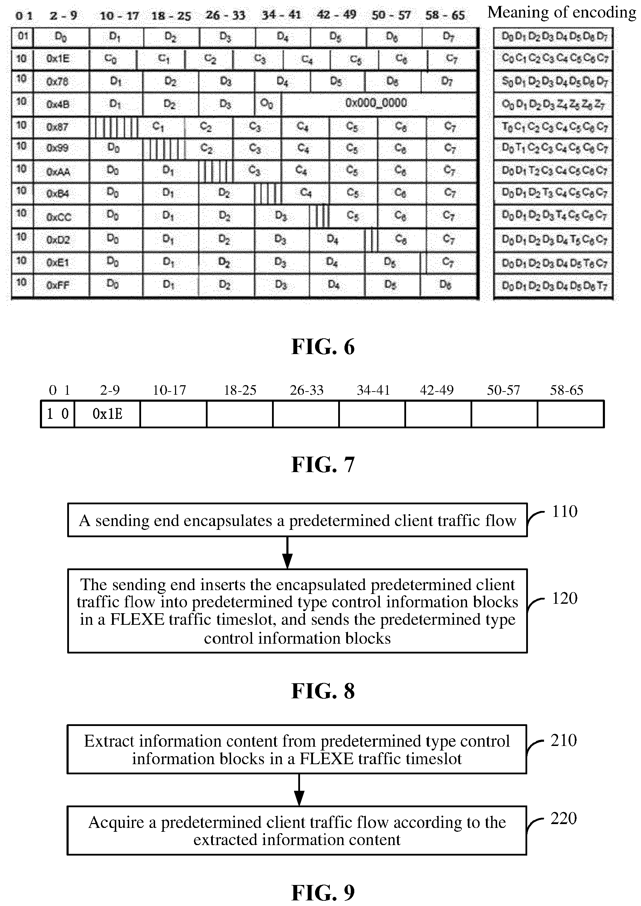

The encoding rule for 64/66 encoding of the client traffic is shown in FIG. 6. As shown in FIG. 6, the length of the 64/66 encoded information block is 66 bits, where the first two bits are information block attribute indication bits for indicating an attribute of the information block. When the content of two information block attribute indication bits is 01, the information block is a pure data block, and the last 64 bits (8 bytes) in the information block are all client data information having a length of 8 bytes from byte D0 to byte D7. When the content of two information block attribute indication bits is 10, the information block is a control information block, and a specific type of the control information block is determined by the content of the first byte in the information block. As shown in the third row in FIG. 6, the content of information block attribute indication bits is 10, the content of the first byte is 0x78 (hexadecimal 78) for denoting that the information block is the first data block (starting block) of a data packet, a meaning of the information block is S0D1D2D3D4D5D6D7, S represents a starting block, the starting flag is on the first byte, and the last seven bytes are client data information. The rest can be done in the same manner. The content of information block attribute indication bits is 10, the content of the first byte is 0xFF (hexadecimal FF) for denoting that the information block is the last data block (termination block) of a data packet, a meaning of the information block is D0D1D2D3D4D5D6T7, T is a termination flag located on the eighth byte, and the first seven bytes are client data information. The content of information block attribute indication bits is 10, the content of the first byte is 0xAA (hexadecimal AA) for denoting that the information block is the last data block (termination block) of a data packet, a meaning of the information block is D0D1T2C3C4C5C6C7, T is a termination flag located on the third byte, the first two bytes are client data information, and the last five bytes (C3 to C7) are auxiliary information without any concern. The content of information block attribute indication bits is 10, the content of the first byte is 0x87 (hexadecimal 87) for denoting that the information block is the last data block (termination block) of a data packet, a meaning of the information block is T0C1C2C3C4C5C6C7, T is a termination flag located on the first byte, the last seven bytes (C1 to C7) are auxiliary information without any concern, and the information block is only used for indicating that information of one client is terminated and does not carry any client data.

A special information block exists, the content of information block attribute indication bits is 10, the content of the first byte is 0x1E (hexadecimal 1E) for denoting that the information block is an idle information block (which may be referred to as an idle block), the first byte represents the idle information block, and the last seven bytes are auxiliary information without any concern. As shown in FIG. 7, the idle information block is only used to adjust the speed of the client traffic flow and does not carry any client traffic data. When the rate of client traffic becomes lower, more idle information blocks need to be inserted to adjust the speed.

### Embodiment one

An embodiment provides a method for delivering a traffic flow in a FlexE protocol. As shown in FIG. 8, the method includes the steps 110 and 120 described below.

In step 110, a sending end encapsulates a predetermined client traffic flow.

In step 120, the sending end inserts the encapsulated predetermined client traffic flow into predetermined type control information blocks in a FlexE traffic timeslot, and sends the predetermined type control information blocks.

The embodiment utilizes the control information block to carry extra traffic flow, the carrying efficiency of a FlexE shim layer is improved and the extra economic value is generated.

In the embodiment, the control information block refers to an information block whose content of information block attribute indication bits is 10; and a type of the control information block is determined by the content of the first byte in the control information block.

In the embodiment, one or more predetermined client traffic flows may be provided. When the predetermined client traffic flow has multiple flows, different predetermined client traffic flows may be distinguished by using different identifiers.

In the embodiment, steps 110 and 120 each may be a continuous process, and the two steps may be performed in parallel. For example, the predetermined client traffic flow is continuously encapsulated while the predetermined type control information blocks in the FlexE traffic timeslot is continuously monitored. Once the predetermined type control information blocks is found, the encapsulated predetermined client traffic flow is inserted into the control information block.

In the embodiment, the predetermined type control information blocks may include one or more types. In a control information block of a different type, the number and positions of bytes for carrying the predetermined client traffic flow (or for inserting the encapsulated predetermined client traffic flow) may be determined according to the type.

In the embodiment, the encapsulation may take any of the following manners: the encapsulation through 64/66 encoding, the encapsulation in a manner of an Ethernet packet and the encapsulation in the format of a High-Level Data Link Control (HDLC) packet. The encapsulation manner may be agreed on by the sending end and the receiving end, or a default encapsulation manner is used.

In one embodiment, the predetermined type control information blocks is an idle information block.

In one embodiment, the predetermined type control information blocks refers to the control information block in which the content of the first byte is 0x1E (hexadecimal 1E).

The predetermined client traffic flow is delivered by utilizing part or all of the last seven bytes in the idle information block, and thereby the bandwidth waste is avoided and the delivery efficiency is improved.

In one embodiment, another type of control information block may also be used as the predetermined type control information blocks.

In one embodiment, the step in which the sending end inserts the encapsulated predetermined client traffic flow into the predetermined type control information blocks in the FlexE traffic timeslot may include the steps described below.

The sending end determines the timeslots carrying the predetermined client traffic flow in the FlexE traffic timeslot.

The sending end determines whether the control information block in the timeslots carrying the predetermined client traffic flow is the predetermined type control information blocks.

The sending end inserts the encapsulated predetermined client traffic flow into the predetermined type control information blocks in response to determining that the control information block in the timeslots carrying the predetermined client traffic flow is the predetermined type control information blocks.

In the embodiment, a position of the timeslot used for carrying the predetermined client traffic flow may be determined according to a predetermined rule. For example, when the predetermined client traffic flow has a single flow, positions of all timeslots in the FLXEX shim layer may be determined as the timeslot positions for carrying the predetermined client traffic flow. For another example, when four members and two predetermined client traffic flows are provided, positions of the first 40 timeslots in the FLXEX shim layer may be determined as the timeslot positions for carrying the first predetermined client traffic flow, and positions of the last 40 timeslots in the FLXEX shim layer may be determined as the timeslot positions for carrying the second predetermined client traffic flow. The present invention only provides a feasible example and the predetermined rule is not limited in practical applications and may be automatically set.

In one embodiment, the timeslots carrying the predetermined client traffic flow may be timeslots of one or more FlexE members.

In one embodiment, when the predetermined client traffic flow has a single flow, the one encapsulated predetermined client traffic flow may be carried on all or part of the timeslots.

When the predetermined client traffic flow has multiple flows, a plurality of encapsulated predetermined client traffic flows may be carried on different timeslots.

In one embodiment, the timeslot positions used for carrying the predetermined client traffic flow may also be pre-stored at the sending end.

In one embodiment, the predetermined client traffic flow may be, but is not limited to, the client traffic flow with the lowest priority.

One type of client traffic is traffic with a low priority and non-guaranteed bandwidth , and such type of traffic has the lowest priority and does not require guaranteed bandwidth (timely delivery is not guaranteed).When the network bandwidth is congested, delivery of such type of traffic is stopped, and the network bandwidth is used for delivery of traffic with a high priority; and when the network bandwidth is idle, such type of traffic is delivered. Such type of traffic is referred to hereinafter as background client traffic.

In one embodiment, the predetermined client traffic flow may be, but is not limited to, a background client traffic flow.

In one embodiment, the predetermined client traffic flow may also include other client traffic flows.

In one embodiment, the step in which the sending end inserts the encapsulated predetermined client traffic flow into the predetermined type control information blocks in the FlexE traffic timeslot may include the steps described below.

The sending end adjusts a speed of the encapsulated predetermined client traffic flow according to the number of the predetermined type control information blocks in the FlexE traffic timeslot in unit time.

The sending end inserts a predetermined client traffic flow after the speed adjustment into the predetermined type control information blocks in the FlexE traffic timeslot.

In one embodiment, the number in unit time may refer to the number in unit time detected at the current moment, and may refer to the average number in unit time obtained by counting the historical data of a certain length.

In one embodiment, the step of performing the speed adjustment on the encapsulated predetermined client traffic flow may include the step described below.

The speed adjustment is performed on the encapsulated predetermined client traffic flow by inserting idle information into the encapsulated predetermined client traffic flow.

In one embodiment, the idle information may be a bit sequence of a predetermined format or the like, and may be inserted in front of or behind data of the predetermined client traffic flow, or at a designated position.

In one embodiment, when the number of the predetermined type control information blocks is relatively large, a high transmission speed may be provided, and if the speed of the predetermined client traffic flow itself is lower than the transmission speed, the speed of the predetermined client traffic flow may be matched with the transmission speed by inserting the idle information or by only using part of bytes in the predetermined type control information blocks for transmission. When the number of the predetermined type control information blocks is relatively large and if the provided transmission speed is lower than the speed of the predetermined client traffic flow, the speed of the predetermined client traffic flow may be matched with the transmission speed by caching the predetermined client traffic flow, by increasing the number of the predetermined type control information blocks, or the like.

In one embodiment, the step in which the sending end inserts the encapsulated predetermined client traffic flow into the predetermined type control information blocks in the FlexE traffic timeslot may include the step described below.

The sending end inserts the encapsulated predetermined client traffic flow into all or part of last seven bytes of the predetermined type control information blocks in the FlexE traffic timeslot.

In one embodiment, among the last seven bytes of the predetermined type control information blocks, a byte used for inserting (or for carrying) the encapsulated predetermined client traffic flow is determined according to a type of the control information block. The last seven bytes of the idle information block may be used for carrying the predetermined client traffic flow. For another example not covered by the invention,

for a control information block whose content of the first byte is 0xAA (hexadecimal AA), the last five bytes may be used for carrying the predetermined client traffic flow.

### Embodiment two

The embodiment provides a method for delivering a traffic flow in a FlexE protocol. As shown in FIG. 9, the method includes the steps 210 and 220 described below.

In step 210, a receiving end extracts information content in predetermined type control information blocks in a FlexE traffic timeslot.

In step 220, the receiving end acquires a predetermined client traffic flow according to the extracted information content.

The embodiment utilizes the control information block to carry extra traffic flow, the carrying efficiency of a FlexE shim layer is improved and the extra economic value is generated.

In the embodiment, the control information block refers to an information block whose content of information block attribute indication bits is 10; and a type of the control information block is determined by the content of the first byte in the control information block.

In the embodiment, the step of acquiring the predetermined client traffic flow according to the extracted information content may include: performing reverse processing of the adaptation operation performed by the sending end on the extracted information content, such as deleting an idle information block inserted during speed adjustment, and performing decapsulation according to a default manner or a manner agreed between the receiving end and the sending end.

In the embodiment, one or more predetermined client traffic flow may be provided.

In the embodiment, steps 210 and 220 each may be a continuous process.

In one embodiment, the predetermined type control information blocks is an idle information block.

In one embodiment, the predetermined type control information blocks refers to the control information block in which the content of the first byte is 0x1E (hexadecimal 1E).

In one embodiment, another type of control information block may also be used as the predetermined type control information blocks.

In one embodiment, before the step 210, the method may further include the step described below.

The receiving end determines a timeslot position for carrying the predetermined client traffic in the FlexE traffic timeslot.

In one embodiment, the timeslot position used for carrying the predetermined client traffic flow may be determined according to a predetermined rule.

In one embodiment, the timeslot position used for carrying the predetermined client traffic flow may also be pre-stored at the sending end or informed by the sending end to the receiving end.

In one embodiment, the predetermined client traffic flow may be, but is not limited to, the client traffic flow with the lowest priority.

In one embodiment, the predetermined client traffic flow may be, but is not limited to, a background client traffic flow.

In one embodiment, the predetermined client traffic flow may also include other client traffic flows.

In one embodiment, the step in which the receiving end acquires the predetermined client traffic flow according to the extracted information content may include the step described below.

The receiving end decapsulates the information content, and the decapsulated information content is spliced according to an identifier of the predetermined client traffic flow to obtain at least one predetermined client traffic flow.

In one embodiment, the predetermined client traffic flow carries an identifier of the traffic flow itself, and the receiving end may identify different predetermined client traffic flows through the identifiers. The extracted information content belonging to the same predetermined client traffic flow is spliced, and the predetermined client traffic flow is recovered.

In one embodiment, the starting and ending of the predetermined client traffic flow each may be represented by a designated identifier, so that the receiving end identifies the starting position and the ending position.

In one embodiment, before the receiving end decapsulates the information content, the method may further include the step described below.

The receiving end discards the idle information inserted into the predetermined client traffic flow.

In one embodiment, the step in which the receiving end extracts the information content in the predetermined type control information blocks in the FlexE traffic timeslot may include the steps described below.

The receiving end determines a timeslots carrying the predetermined client traffic flow in the FlexE traffic timeslot.

The receiving end determines whether a control information block in the timeslots carrying the predetermined client traffic flow is the predetermined type control information blocks.

The receiving end extracts the information content from the predetermined type control information blocks in response to determining that the control information block in the timeslots carrying the predetermined client traffic flow is the predetermined type control information blocks.

In one embodiment, the timeslots carrying the predetermined client traffic flow may be a timeslot of one or more FlexE members.

In one embodiment, when the predetermined client traffic flow has a single flow, the one encapsulated predetermined client traffic flow is carried on all or part of the timeslots.

When the predetermined client traffic flow has multiple flows, a plurality of encapsulated predetermined client traffic flows are carried on different timeslots.

In one embodiment, the step in which the receiving end extracts the information content in the predetermined type control information blocks in the FlexE traffic timeslot may include the step described below.

The receiving end extracts the information content from all or part of the last seven bytes of the predetermined type control information blocks in the FlexE traffic timeslot.

In one embodiment, in the predetermined type control information blocks, a byte used for extracting the information content (that is, a byte used for carrying the predetermined client traffic flow) is determined according to a type of the control information block. The last seven bytes of the idle information block are used for carrying the predetermined client traffic flow. For another example not covered by the invention,

for the control information block whose content of the first byte is 0xAA (hexadecimal AA), the last five bytes may be used for carrying the predetermined client traffic flow.

The embodiments described above will be described below through three implementation examples. In these three embodiments, the predetermined client traffic flow is the background client traffic flow, and each of the predetermined type control information blocks is an idle information block.

### Implementation example one

At the sending end, the background client traffic flow is adapted, the adaptation is to process the background client traffic flow to meet the needs of inserting into the idle information block, and the adaptation includes encapsulation and speed adjustment (that is, speed adaptation) of the background traffic flow.

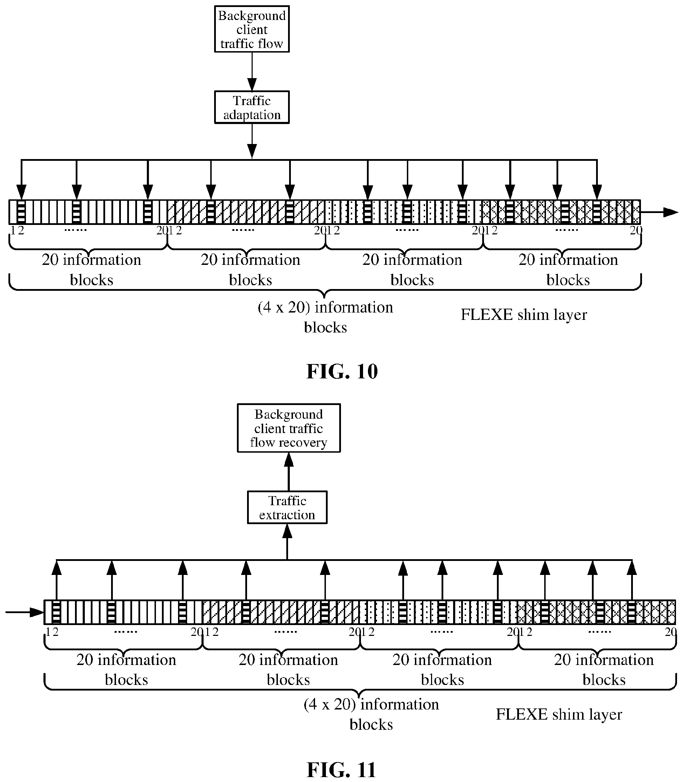

As shown in FIG. 10, since the background client traffic flow may be in one or more types and may be data with one or more speeds, the background client traffic flow cannot be directly inserted into the idle information blocks (that is, blocks filled with transverse lines in FIG. 10), and thus firstly, the background client traffic flow needs to be encapsulated, which may be encapsulation through 64/66 encoding , encapsulation in a manner of an Ethernet packet, or encapsulation in the format of an HDLC packet.

After the encapsulation, the speed of the encapsulated traffic flow may be adjusted to meet the speed requirements of inserting into the idle information block. The speed adjustment is to insert some idle information into the background client traffic flow. After the speed adjustment, the requirement of insertion speed in the FlexE shim layer is met. Since the number of idle information blocks in the FlexE shim layer is dynamically changing, the number of idle information blocks at a transient time moment is large, and the number of idle information blocks at a transient time moment is small. Thus, the speed adjustment is required to change dynamically in time.

After the background client traffic flow is adapted, it is determined which timeslot positions in the FlexE shim layer are used for carrying the background client traffic flow, and then it is determined whether the information blocks of these timeslot positions are idle information blocks. In the case of the idle information blocks, the adapted background client traffic flow is inserted into the last 7 bytes of the idle information block. Last 7 bytes exist in an idle information block, and 7 bytes of background client traffic flows may be carried at one time. According to the same method, each timeslot position that may be used for carrying a background client traffic flow is detected, and it is detected whether an idle information block exists at the each timeslot position. If the idle information block exists at the each timeslot position, 7 bytes of the background client traffic flow are carried, and the background client traffic flow may be sent out from the FlexE shim layer when all idle information blocks in the four information block groups are inserted with and carry the background client traffic flow.

At the receiving end, as shown in FIG. 11, it is determined which timeslot positions in the FlexE shim layer may carry the background client traffic flow, and then it is determined whether the idle information blocks (that is, the blocks filled with the transverse lines in FIG. 11) exist at the timeslot positions. If the idle information blocks exist at the timeslot positions, the background client traffic flow is extracted from positions of the last 7 bytes in the idle information block. The rest can be done in the same manner, the background client traffic flow is extracted from all the idle information blocks located at the timeslots carrying the background client traffic, and the extraction work is completed. A recovery operation is performed on the extracted background client traffic flows: the inserted idle information during the speed adjustment is discarded, the decapsulation is performed and then the original background client traffic flow is recovered.

FIGS. 10 and 11 are schematic diagrams of a transmitting end and a receiving end, respectively, in the case where one background client traffic flow is delivered through the timeslots (that is, timeslots of all members) of the FlexE shim layer. In the embodiment, one or more background client traffic flows may be provided. The background client traffic flow may be inserted on the FlexE shim layer, and may also be inserted on each member of the FlexE. The background client traffic flow may be delivered on the idle information blocks, and may also be delivered on other control information blocks (one or more types of control information blocks, such as an o code information block or a customized control information block).

Multiple timeslots exist in the FlexE shim layer, and the background client traffic flow may be delivered at all timeslot positions and may also be delivered at part of the timeslot positions. One background client traffic flow may occupy all timeslot positions, or the plurality of background client traffic flows may occupy different timeslot positions respectively.

### Implementation example two

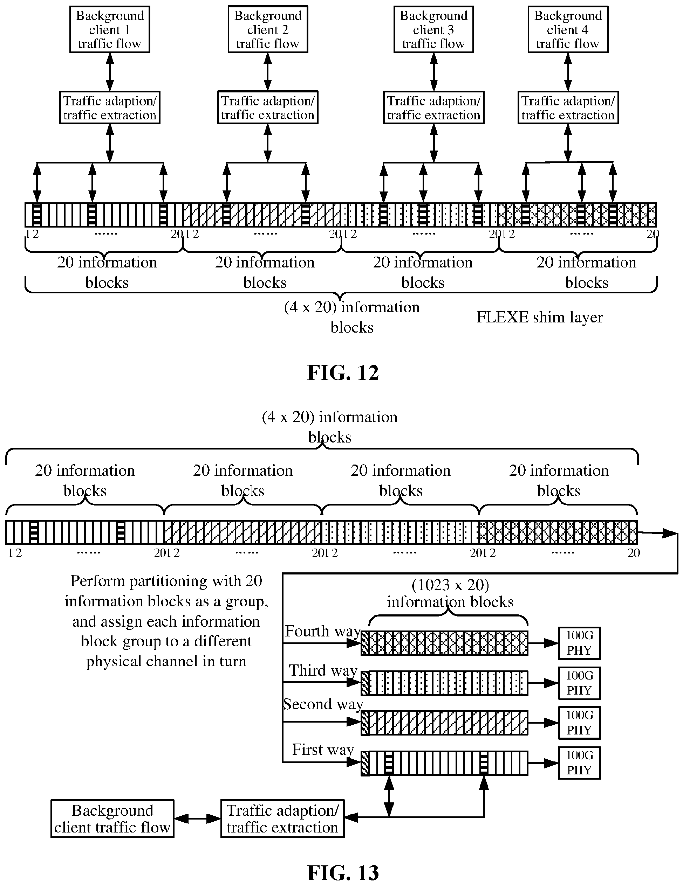

As shown in FIG. 12, 4 background client traffic flows (background client 1 traffic flow to background client 4 traffic flow in FIG. 12) are provided. The first background client traffic flow is carried at positions of the first 20 timeslots in the FlexE shim layer. The second background client traffic flow is carried at positions of the 21st to 40th timeslots in the FlexE shim layer. The third background client traffic flow is carried at positions of the 41st to 60th timeslots in the FlexE shim layer. The fourth background client traffic flow is carried at positions of the last 20 timeslots in the FlexE shim layer.

FIG. 12 shows operations performed by the sending end and the receiving end. The traffic adaptation is performed by the sending end and a downward arrow represents the processing flow of the sending end. Traffic extraction is performed by the receiving end and an upward arrow represents the processing flow of the receiving end. In FIG. 12, the blocks filled with the transverse lines are the idle information blocks. The sending end inserts a background client traffic flow 1 into the idle information blocks of the first 20 timeslots, inserts a background client traffic flow 2 into the idle information blocks of the 21st to 40th timeslots, inserts a background client traffic flow 3 into the idle information blocks of the 41st to 60th timeslots, and inserts a background client traffic flow 4 into the idle information blocks of the last 20 timeslots. The receiving end extracts the background client traffic flow 1 from the idle information blocks of the first 20 timeslots, extracts the background client traffic flow 2 from the idle information blocks of the 21st to 40th timeslots, extracts the background client traffic flow 3 from the idle information blocks of the 41st to 60th timeslots, and extracts the background client traffic flow 4 from the idle information blocks of the last 20 timeslots.

### Implementation example three

As shown in FIG. 13, the background client traffic flow is directly delivered in one member of the FlexE. During implementation, it is detected whether each information block in the member of the FlexE is the idle information block (that is, the block filled with the transverse lines in FIG. 13). If the information block is the idle information block, the background client traffic flow of 7 bytes is inserted into the idle information block. The insertion positions of the background client traffic flow at the sending end and the extraction positions of the background client traffic flow at the receiving end are the timeslot positions of one member (that is, the first way in FIG. 13) in the FlexE.

### Implementation example four

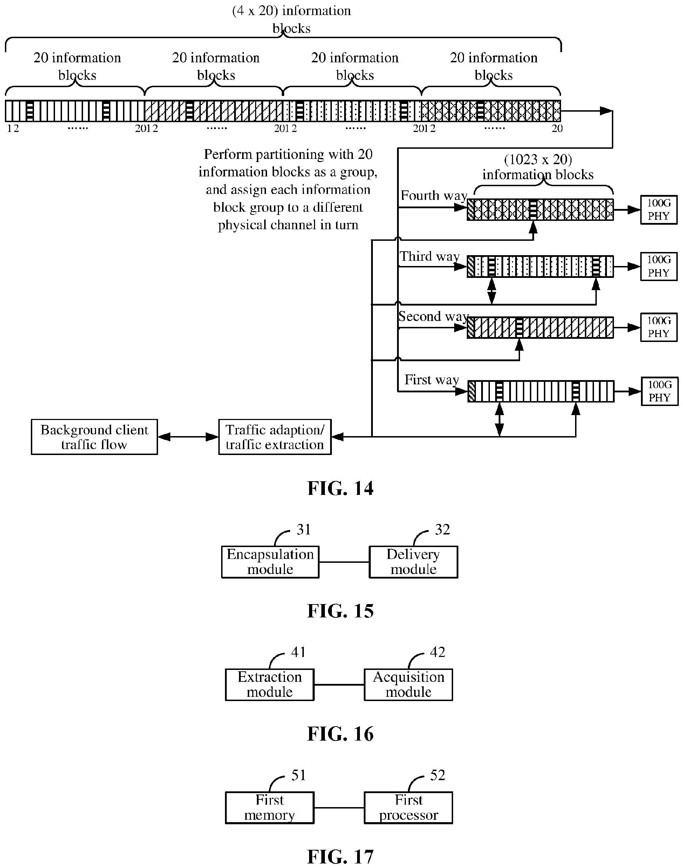

As shown in FIG. 14, the background traffic flow is delivered in all members of the FlexE. During implementation, it is detected whether each information block of all members in the FlexE is the idle information block (that is, the block filled with the transverse lines in FIG. 14). If the information block is the idle information block, the background client traffic flow of 7 bytes is inserted into the idle information block. The insertion positions of the background client traffic flow at the sending end and the extraction positions of the background client traffic flow at the receiving end are the timeslot positions of all members in the FlexE.

### Embodiment three

The embodiment provides an apparatus for delivering a traffic flow in a Flex Ethernet protocol (FlexE) protocol. As shown in FIG. 15, the apparatus includes an encapsulation module 31 and a delivery module 32.

The encapsulation module 31 is configured to encapsulate a predetermined client traffic flow.

The delivery module 32 is configured to insert the encapsulated predetermined client traffic flow into predetermined type control information blocks in a FlexE traffic timeslot, and send the predetermined type control information blocks.

In one embodiment, the predetermined type control information blocks is an idle information block.

In one embodiment, the predetermined client traffic flow may be, but is not limited to, a client traffic flow with the lowest priority.

In one embodiment, the delivery module 32 is configured to insert the encapsulated predetermined client traffic flow into the predetermined type control information blocks in the FlexE traffic timeslot in the manners described below.

Speed adjustment is performed on the encapsulated predetermined client traffic flow according to the number of the predetermined type control information blocks in the FlexE traffic timeslot in unit time.

A predetermined client traffic flow after the speed adjustment is inserted into the control information block(s) of the predetermined type in the FlexE traffic timeslot.

In one embodiment, the delivery module 32 is configured to adjust the speed of the encapsulated predetermined client traffic flow in the manner described below.

The speed adjustment is performed on the encapsulated predetermined client traffic flow by inserting idle information into the encapsulated predetermined client traffic flow.

In one embodiment, the delivery module 32 is configured to insert the encapsulated predetermined client traffic flow into the predetermined type control information blocks in the FlexE traffic timeslot in the manners described below.

The timeslots carrying the predetermined client traffic flow in the FlexE traffic timeslot is determined.

It is determined whether the control information block in the timeslots carrying the predetermined client traffic flow is the predetermined type control information blocks.

The encapsulated predetermined client traffic flow is inserted into the predetermined type control information blocks in response to determining that the control information block in the timeslots carrying the predetermined client traffic flow is the predetermined type control information blocks.

In one embodiment, the timeslots carrying the predetermined client traffic flow may be a timeslot of one or more FlexE members.

In one embodiment, when the predetermined client traffic flow has a single flow, the one encapsulated predetermined client traffic flow is carried on all or part of the timeslots.

When a plurality of the predetermined client traffic flows are provided, the plurality of encapsulated predetermined client traffic flows are carried on different timeslots.

In one embodiment, the delivery module 32 is configured to insert the encapsulated predetermined client traffic flow into the predetermined type control information blocks in the FlexE traffic timeslot in the manner described below.

The encapsulated predetermined client traffic flow is inserted into all or part of the last seven bytes of the predetermined type control information blocks in the FlexE traffic timeslot.

In one embodiment, among the last seven bytes of the predetermined type control information blocks, a byte used for inserting the encapsulated predetermined client traffic flow may be determined according to a type of the control information block.

For other implementation details, reference may be made to any of the above embodiments.

### Embodiment four

The embodiment provides an apparatus for delivering a traffic flow in a Flex Ethernet protocol (FlexE) protocol. As shown in FIG. 16, the apparatus includes an extraction module 41 and an acquisition module 42.

The extraction module 41 is configured to extract information content in predetermined type control information blocks in a FlexE traffic timeslot.

The acquisition module 42 is configured to acquire a predetermined client traffic flow according to the extracted information content.

In one embodiment, the predetermined type control information blocks is an idle information block.

In one embodiment, the predetermined client traffic flow may be, but is not limited to, the client traffic flow with the lowest priority.

In one embodiment, the acquisition module 42 is configured to perform operations described below.

The information content is decapsulated, and the decapsulated information content is spliced according to an identifier of the predetermined client traffic flow to obtain at least one predetermined client traffic flow.

In one embodiment, the apparatus further includes a discarding module, which is configured to discard the idle information inserted into the predetermined client traffic flow before the acquisition module decapsulates the information content.

In one embodiment, the extraction module 41 is configured to perform operations described below.

The timeslots carrying the predetermined client traffic flow in the FlexE traffic timeslot is determined.

It is determined whether the control information block in the timeslots carrying the predetermined client traffic flow is the predetermined type control information blocks.

The information content is extracted from the predetermined type control information blocks in response to determining that the control information block in the timeslots carrying the predetermined client traffic flow is the predetermined type control information blocks.

In one embodiment, the timeslots carrying the predetermined client traffic flow is timeslot of one or more FlexE members.

In one embodiment, when the predetermined client traffic flow has a single flow, the one encapsulated predetermined client traffic flow is carried on all or part of the timeslots.

When the predetermined client traffic flow has multiple flows, a plurality of encapsulated predetermined client traffic flows are carried on different timeslots.

In one embodiment, the extraction module 41 is configured to perform operations described below.

The information content is extracted from all or part of last seven bytes of the predetermined type control information blocks in the FlexE traffic timeslot.

In one embodiment, among the last seven bytes of the predetermined type control information blocks, a byte used for extracting the information content is determined according to a type of the control information block.

For other implementation details, reference may be made to any of the above embodiments.

### Embodiment five

The embodiment provides an apparatus for delivering a traffic flow in a Flex Ethernet protocol (FlexE) protocol. As shown in FIG. 17, the apparatus includes a first memory 51 and a first processor 52.

The first memory 51 is configured to store executable instructions.

The first processor 52 is configured to execute the executable instructions to perform the operations described below.

A predetermined client traffic flow is encapsulated.

The encapsulated predetermined client traffic flow is inserted into predetermined type control information blocks in a FlexE traffic timeslot, and the predetermined type control information blocks are sent.

In one embodiment, the predetermined type control information blocks is an idle information block.

In one embodiment, the predetermined client traffic flow may be, but is not limited to, the client traffic flow with the lowest priority.

In one embodiment, the step in which the encapsulated predetermined client traffic flow is inserted into the predetermined type control information blocks in the FlexE traffic timeslot may include the steps described below.

Speed adjustment is performed on the encapsulated predetermined client traffic flow according to the number of the control information blocks of the predetermined type in the FlexE traffic timeslot in unit time.

A predetermined client traffic flow after the speed adjustment is inserted into the predetermined type control information blocks in the FlexE traffic timeslot.

In one embodiment, the step in which the speed adjustment is performed on the encapsulated predetermined client traffic flow may include the step described below.

The speed adjustment is performed on the encapsulated predetermined client traffic flow by inserting idle information into the encapsulated predetermined client traffic flow.

In one embodiment, the step in which the encapsulated predetermined client traffic flow is inserted into the predetermined type control information blocks in the FlexE traffic timeslot may include the steps described below.

The timeslots carrying the predetermined client traffic flow in the FlexE traffic timeslot is determined.

It is determined whether the control information block in the timeslots carrying the predetermined client traffic flow is the predetermined type control information blocks.

The encapsulated predetermined client traffic flow is inserted into the predetermined type control information blocks in response to determining that the control information block in the timeslots carrying the predetermined client traffic flow is the predetermined type control information blocks.

In one embodiment, the timeslots carrying the predetermined client traffic flow is a timeslot of one or more FlexE members.

In one embodiment, when the predetermined client traffic flow has a single flow, the one encapsulated predetermined client traffic flow is carried on all or part of the timeslots.

When the predetermined client traffic flow has multiple flows, a plurality of encapsulated predetermined client traffic flows are carried on different timeslots.

In one embodiment, the step in which the encapsulated predetermined client traffic flow is inserted into the predetermined type control information blocks in the FlexE traffic timeslot may include the step described below.

The encapsulated predetermined client traffic flow is inserted into all or part of the last seven bytes of the predetermined type control information blocks in the FlexE traffic timeslot.

In one embodiment, among the last seven bytes of the predetermined type control information blocks, a byte used for inserting the encapsulated predetermined client traffic flow is determined according to a type of the control information block.

For other implementation details, reference may be made to any of the above embodiments.

### Embodiment six

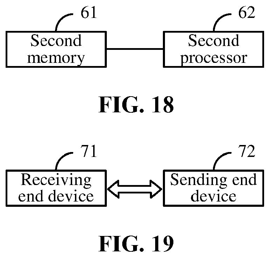

The embodiment provides an apparatus for delivering a traffic flow in a Flex Ethernet protocol (FlexE) protocol. As shown in FIG. 18, the apparatus includes a second memory 61 and a second processor 62.

The second memory 61 is configured to store executable instructions.

The second processor 62 is configured to execute the executable instructions to perform the operations described below.

Information content in predetermined type control information blocks in a FlexE traffic timeslot is extracted.

A predetermined client traffic flow is acquired according to the extracted information content.

In one embodiment, the predetermined type control information blocks is an idle information block.

In one embodiment, the predetermined client traffic flow may be, but is not limited to, a client traffic flow with the lowest priority.

In one embodiment, the step in which the predetermined client traffic flow is acquired according to the extracted information content may include the step described below.

The information content is decapsulated, and the decapsulated information content is spliced according to an identifier of the predetermined client traffic flow to obtain the predetermined client traffic flow.

In one embodiment, before the information content is decapsulated, the apparatus may further perform the operation described below.

The idle information inserted into the predetermined client traffic flow is discarded.

In one embodiment, the step in which the information content in the predetermined type control information blocks in the FlexE traffic timeslot is extracted may include the steps described below.

The timeslots carrying the predetermined client traffic flow in the FlexE traffic timeslot is determined.

The information content is extracted from the predetermined type control information blocks in response to determining that the control information block in the timeslots carrying the predetermined client traffic flow is the predetermined type control information blocks.

In one embodiment, the timeslots carrying the predetermined client traffic flow is a timeslot of one or more FlexE members.

In one embodiment, when the predetermined client traffic flow has a single flow, the one encapsulated predetermined client traffic flow is carried on all or part of the timeslots.

When the predetermined client traffic flow has multiple flows, a plurality of encapsulated predetermined client traffic flows are carried on different timeslots.

In one embodiment, the step in which the information content in the predetermined type control information blocks in the FlexE traffic timeslot is extracted may include the step described below.

The information content is extracted from all or part of the last seven bytes of the predetermined type control information blocks in the FlexE traffic timeslot.

In one embodiment, among the last seven bytes of the predetermined type control information blocks, a byte used for extracting the information content is determined according to a type of the control information block.

For other implementation details, reference may be made to any of the above embodiments.

The following examples are not according to the invention and are presented illustration purposes only.

### Example seven

The embodiment provides a system for delivering a traffic flow in a Flex Ethernet protocol. As shown in FIG. 19, the system includes a sending end device 71 and a receiving end device 72.

The sending end device 71 is configured to encapsulate a predetermined client traffic flow; and insert the encapsulated predetermined client traffic flow into predetermined type control information blocks in a FlexE traffic timeslot, and send the predetermined type control information blocks to the receiving end device 72.

The receiving end device 72 is configured to extract information content in the predetermined type control information blocks in the FlexE traffic timeslot; and acquire the predetermined client traffic flow according to the extracted information content.

In the embodiment, for other implementation details of the sending end device, reference may be made to the embodiment one, the embodiment three and the embodiment five; and for other implementation details of the receiving end device, reference may be made to the embodiment two, the embodiment four, and the embodiment six.

### Example eight

The embodiment provides a computer storage medium configured to store computer-executable instructions for executing the method according to the embodiment one or any implementation mode in the embodiment one when the computer-executable instructions are executed by a processor.

### Example nine

The embodiment provides a computer storage medium configured to store computer-executable instructions for executing the method according to the embodiment two or any implementation mode in the embodiment two when the computer-executable instructions are executed by a processor.

Although the embodiments disclosed by the present application are as described above, the content thereof is merely embodiments for facilitating the understanding of the present application and is not intended to limit the present application.

### INDUSTRIAL APPLICABILITY

According to the present invention, a part of client traffic flows is delivered by utilizing the control information block under the condition that the normal traffic delivery of the FlexE is not affected, which can improve the utilization rate of a delivery channel, and thereby improve the traffic delivery efficiency.

## Claims

1. A method for delivering a traffic flow in a Flex Ethernet, FlexE, protocol, comprising:
encapsulating (110), by a sending end, a predetermined client traffic flow; and
inserting (120), by the sending end, the encapsulated predetermined client traffic flow into predetermined type control information blocks in a FlexE traffic timeslot, and sending the predetermined type control information blocks;
wherein the inserting, by the sending end, the encapsulated predetermined client traffic flow into the predetermined type control information blocks in the FlexE traffic timeslot comprises:
inserting, by the sending end, the encapsulated predetermined client traffic flow into all or part of last seven bytes of each of the predetermined type control information blocks in the FlexE traffic timeslot; and
each of the predetermined type control information blocks is an idle information block in which content of a first byte is 0x1E.

2. The method of claim 1, wherein the predetermined client traffic flow is a client traffic flow having a lowest priority.

3. The method of claim 1 or 2, wherein the inserting, by the sending end, the encapsulated predetermined client traffic flow into the predetermined type control information blocks in the FlexE traffic timeslot, comprises:
adjusting, by the sending end, a speed of the encapsulated predetermined client traffic flow according to a number of the predetermined type control information blocks in the FlexE traffic timeslot in unit time; and
inserting, by the sending end, the encapsulated predetermined client traffic flow after the speed adjustment into the predetermined type control information blocks in the FlexE traffic timeslot.

4. The method of claim 3, wherein the adjusting the speed of the encapsulated predetermined client traffic flow comprises:
adjusting the speed of the encapsulated predetermined client traffic flow by inserting idle information into the encapsulated predetermined client traffic flow.

5. The method of claim 1, wherein inserting, by the sending end, the encapsulated predetermined client traffic flow into the predetermined type control information blocks in the FlexE traffic timeslot comprises:
determining, by the sending end, timeslots carrying the predetermined client traffic flow in the FlexE traffic timeslot;
determining, by the sending end, whether control information blocks in the timeslots carrying the predetermined client traffic flow are the predetermined type control information blocks; and
in response to determining that the control information blocks in the timeslots carrying the predetermined client traffic flow are the predetermined type control information blocks, inserting, by the sending end, the encapsulated predetermined client traffic flow into the predetermined type control information blocks.

6. The method of claim 5, wherein the timeslots carrying the predetermined client traffic flow is timeslots of one or more FlexE members;
wherein in condition that the predetermined client traffic flow has a single flow, the encapsulated predetermined client traffic flow is carried on all or part of the timeslots; and
in condition that the predetermined client traffic flow has multiple flows, the encapsulated predetermined client traffic flow is carried on different timeslots.

7. The method of claim 1,
wherein among the last seven bytes of the each of the predetermined type control information blocks, a byte used for inserting the encapsulated predetermined client traffic flow is determined according to types of the control information blocks.

8. A method for delivering a traffic flow in a Flex Ethernet, FlexE, protocol, comprising:
extracting (210), by a receiving end, information content in predetermined type control information blocks in a FlexE traffic timeslot; and
acquiring (220), by the receiving end, a predetermined client traffic flow according to the extracted information content;
wherein the predetermined client traffic flow is inserted by a sending end into all or part of last seven bytes of each of the predetermined type control information blocks in the FlexE traffic timeslot; and each of the predetermined type control information blocks is an idle information block in which content of a first byte is 0x1E.

9. The method of claim 8, wherein the predetermined client traffic flow is a client traffic flow having a lowest priority.

10. The method of claim 8 or 9, wherein the acquiring, by the receiving end, the predetermined client traffic flow according to the extracted information content comprises:
decapsulating, by the receiving end, the information content, and splicing the decapsulated information content according to an identifier of the predetermined client traffic flow to obtain at least one predetermined client traffic flow;
wherein before the decapsulating, by the receiving end, the information content, the method further comprises:
discarding, by the receiving end, idle information inserted into the predetermined client traffic flow.

11. The method of claim 8, wherein the extracting, by the receiving end, the information content in the predetermined type control information blocks in the FlexE traffic timeslot comprises:
determining, by the receiving end, timeslots carrying the predetermined client traffic flow in the FlexE traffic timeslot;
determining, by the receiving end, whether a control information block in the timeslots carrying the predetermined client traffic flow is the predetermined type control information blocks; and
extracting, by the receiving end, the information content from the predetermined type control information blocks in response to determining that the control information block in the timeslots carrying the predetermined client traffic flow is the predetermined type control information blocks.

12. The method of claim 11, wherein the timeslots carrying the predetermined client traffic flow are timeslots of one or more FlexE members;
wherein in condition that the predetermined client traffic flow has a single flow, the encapsulated predetermined client traffic flow is carried on all or part of the timeslots; and
in condition that the predetermined client traffic flow has multiple flows, the encapsulated predetermined client traffic flow is carried on different timeslots.

13. The method of claim 8, wherein the extracting, by the receiving end, the information content in each of the predetermined type control information blocks in the FlexE traffic timeslot comprises:
extracting, by the receiving end, the information content from all or part of last seven bytes of the each of the predetermined type control information blocks in the FlexE traffic timeslot;
wherein in the predetermined type control information blocks, a byte used for extracting the information content is determined according to a type of the control information block.

14. An apparatus for delivering a traffic flow in a Flex Ethernet, FlexE, protocol, comprising:
an encapsulation module (31), which is configured to encapsulate a predetermined client traffic flow;
a delivery module (32), which is configured to insert the encapsulated predetermined client traffic flow into predetermined type control information blocks in a FlexE traffic timeslot, and
send the predetermined type control information blocks;
an extraction module (41), which is configured to extract information content in the predetermined type control information blocks in the FlexE traffic timeslot; and
an acquisition module (42), which is configured to acquire, according to the extracted information content, the predetermined client traffic flow;
wherein the delivery module (32) is configured to insert the encapsulated predetermined client traffic flow into all or part of last seven bytes of each of the predetermined type control information blocks in the FlexE traffic timeslot; and each of the predetermined type control information blocks is an idle information block in which content of a first byte is 0x1E.

## Patentansprüche

1. Verfahren zum Liefern eines Verkehrsflusses in einem Flex-Ethernet, FlexE, Protokoll, umfassend:
Einkapseln (110) eines vorbestimmten Client-Verkehrsflusses durch ein sendendes Ende; und
Einfügen (120) des eingekapselten vorbestimmten Client-Verkehrsflusses durch das sendende Ende in vorbestimmte Steuerinformationsblöcke in einem FlexE-Verkehrszeitschlitz, und Senden der vorbestimmten Steuerinformationsblöcke; wobei das Einfügen des eingekapselten vorbestimmten Client-Verkehrsflusses durch das sendende Ende in die vorbestimmten Typ-Steuerinformationsblöcke in dem FlexE-Verkehrszeitschlitz umfasst:
Einfügen des eingekapselten vorbestimmten Client-Verkehrsflusses durch das sendende Ende in alle oder einen Teil der letzten sieben Bytes jedes der vorbestimmten Typ-Steuerinformationsblöcke in dem FlexE-Verkehrszeitschlitz; und jeder der Steuerinformationsblöcke vom vorbestimmten Typ ein Leerlaufinformationsblock ist, in dem der Inhalt eines ersten Bytes 0x1E ist.

2. Verfahren nach Anspruch 1, wobei der vorbestimmte Client-Verkehrsfluss ein Client-Verkehrsfluss mit der niedrigsten Priorität ist.

3. Verfahren nach Anspruch 1 oder 2, wobei das Einfügen des eingekapselten vorbestimmten Client-Verkehrsflusses durch das sendende Ende in die vorbestimmten Typ-Steuerungsinformationsblöcke in dem FlexE-Verkehrszeitschlitz umfasst:
Einstellen einer Geschwindigkeit des eingekapselten vorbestimmten Client-Verkehrsflusses durch das sendende Ende entsprechend einer Anzahl der vorbestimmten Steuerinformationsblöcke in dem FlexE-Verkehrszeitschlitz in Zeiteinheit; und
Einfügen des eingekapselten vorbestimmten Client-Verkehrsflusses durch das sendende Ende nach der Geschwindigkeitsanpassung in die vorbestimmten Typ-Steuerinformationsblöcke in dem FlexE-Verkehrszeitschlitz.

4. Verfahren nach Anspruch 3, wobei das Anpassen der Geschwindigkeit des eingekapselten vorbestimmten Client-Verkehrsflusses umfasst:
Einstellen der Geschwindigkeit des eingekapselten vorbestimmten Client-Verkehrsflusses durch Einfügen von Leerlaufinformationen in den eingekapselten vorbestimmten Client-Verkehrsfluss.

5. Verfahren nach Anspruch 1, wobei das Einfügen des eingekapselten vorbestimmten Client-Verkehrsflusses durch das sendende Ende in die vorbestimmten Typ-Steuerinformationsblöcke in dem FlexE-Verkehrszeitschlitz Folgendes umfasst:
Bestimmen, durch das sendende Ende, von Zeitschlitzen, die den vorbestimmten Client-Verkehrsfluss in dem FlexE-Verkehrszeitschlitz tragen;
Bestimmen, durch das sendende Ende, ob Steuerinformationsblöcke in den Zeitschlitzen, die den vorbestimmten Client-Verkehrsfluss tragen, die Steuerinformationsblöcke des vorbestimmten Typs sind;
und als Reaktion auf das Bestimmen, dass die Steuerinformationsblöcke in den Zeitschlitzen, die den vorbestimmten Client-Verkehrsfluss tragen, die Steuerinformationsblöcke des vorbestimmten Typs sind, Einfügen, durch das sendende Ende, des eingekapselten vorbestimmten Client-Verkehrsflusses in die Steuerinformationsblöcke des vorbestimmten Typs.

6. Verfahren nach Anspruch 5, wobei die Zeitschlitze, die den vorbestimmten Client-Verkehrsfluss tragen, Zeitschlitze von einem oder mehreren FlexE-Mitgliedern sind;
wobei unter der Bedingung, dass der vorbestimmte Client-Verkehrsfluss einen einzigen Fluss hat, der eingekapselte vorbestimmte Client-Verkehrsfluss auf allen oder einem Teil der Zeitschlitze übertragen wird;
und unter der Bedingung, dass der vorbestimmte Client-Verkehrsfluss mehrere Flüsse hat, der eingekapselte vorbestimmte Client-Verkehrsfluss auf verschiedenen Zeitschlitzen übertragen wird.

7. Verfahren nach Anspruch 1,
wobei unter den letzten sieben Bytes jedes der Steuerinformationsblöcke des vorbestimmten Typs ein Byte, das zum Einfügen des eingekapselten vorbestimmten Client-Verkehrsflusses verwendet wird, gemäß den Typen der Steuerinformationsblöcke bestimmt wird.

8. Verfahren zum Liefern eines Verkehrsflusses in einem Flex-Ethernet, FlexE, Protokoll, umfassend:
Extrahieren (210) von Informationsinhalten in Steuerinformationsblöcken vorbestimmten Typs in einem FlexE-Verkehrszeitschlitz durch ein empfangendes Ende;
und Erfassen (220), durch das empfangende Ende, eines vorbestimmten Client-Verkehrsflusses gemäß dem extrahierten Informationsinhalt;
wobei der vorbestimmte Client-Verkehrsfluss von einem sendenden Ende in alle oder einen Teil der letzten sieben Bytes jedes der vorbestimmten Typ-Steuerinformationsblöcke in dem FlexE-Verkehrszeitschlitz eingefügt wird; und jeder der vorbestimmten Typ-Steuerinformationsblöcke ein LeerlaufInformationsblock ist, in dem der Inhalt eines ersten Bytes 0x1E ist.

9. Verfahren nach Anspruch 8, wobei der vorbestimmte Client-Verkehrsfluss ein Client-Verkehrsfluss mit der niedrigsten Priorität ist.

10. Verfahren nach Anspruch 8 oder 9, wobei das Erfassen des vorbestimmten Client-Verkehrsflusses durch das empfangende Ende gemäß dem extrahierten Informationsinhalt Folgendes umfasst:
Entkapseln des Informationsinhalts durch die Empfangsseite und Spleißen des entkapselten Informationsinhalts gemäß einer Kennung des vorbestimmten Client-Verkehrsflusses, um mindestens einen vorbestimmten Client-Verkehrsfluss zu erhalten;
wobei das Verfahren vor dem Entkapseln des Informationsinhalts durch das empfangende Ende weiterhin umfasst:
Verwerfen von Leerlaufinformationen, die in den vorbestimmten Client-Verkehrsfluss eingefügt wurden, durch die Empfangsseite.

11. Verfahren nach Anspruch 8, wobei das Extrahieren des Informationsinhalts in den vorbestimmten Typ-Steuerinformationsblöcken im FlexE-Verkehrszeitschlitz durch das empfangende Ende Folgendes umfasst:
Bestimmen, durch das empfangende Ende, von Zeitschlitzen, die den vorbestimmten Client-Verkehrsfluss in dem FlexE-Verkehrszeitschlitz führen;
Bestimmen, durch das empfangende Ende, ob ein Steuerinformationsblock in den Zeitschlitzen, die den vorbestimmten Client-Verkehrsfluss führen, die Steuerinformationsblöcke vom vorbestimmten Typ sind; und
Extrahieren des Informationsinhalts aus den Steuerinformationsblöcken des vorbestimmten Typs durch das empfangende Ende als Reaktion auf die Bestimmung, dass der Steuerinformationsblock in den Zeitschlitzen, die den vorbestimmten Client-Verkehrsfluss tragen, der vorbestimmte Typ von Steuerinformationsblöcken ist.

12. Verfahren nach Anspruch 11, wobei die Zeitschlitze, die den vorbestimmten Client-Verkehrsfluss führen, Zeitschlitze von einem oder mehreren FlexE-Mitgliedern sind;
wobei unter der Bedingung, dass der vorbestimmte Client-Verkehrsfluss einen einzigen Fluss hat, der gekapselte vorbestimmte Client-Verkehrsfluss auf allen oder einem Teil der Zeitschlitze übertragen wird; und
unter der Bedingung, dass der vorbestimmte Client-Verkehrsfluss mehrere Flüsse hat, der eingekapselte vorbestimmte Client-Verkehrsfluss auf verschiedenen Zeitschlitzen übertragen wird.

13. Verfahren nach Anspruch 8, wobei das Extrahieren des Informationsinhalts in jedem der Steuerinformationsblöcke des vorbestimmten Typs in dem FlexE-Verkehrszeitschlitz durch das empfangende Ende umfasst:
Extrahieren des Informationsinhalts durch das empfangende Ende aus allen oder einem Teil der letzten sieben Bytes jedes der vorbestimmten Typ-Steuerinformationsblöcke im FlexE-Verkehrszeitschlitz;
wobei in den Steuerinformationsblöcken des vorbestimmten Typs ein zum Extrahieren des Informationsinhalts verwendetes Byte gemäß einem Typ des Steuerinformationsblocks bestimmt wird.

14. Vorrichtung zum Liefern eines Verkehrsflusses in einem Flex-Ethernet, FlexE-Protokoll, mit:
einem Verkapselungsmodul (31), das zum Verkapseln eines vorbestimmten Client-Verkehrsflusses konfiguriert ist;
ein Auslieferungsmodul (32), das so konfiguriert ist, dass es den eingekapselten vorbestimmten Client-Verkehrsfluss in vorbestimmte Typ-Steuerinformationsblöcke in einem FlexE-Verkehrszeitschlitz einfügt und die vorbestimmten Typ-Steuerinformationsblöcke sendet;
ein Extraktionsmodul (41), das so konfiguriert ist, dass es den Informationsinhalt in den Steuerinformationsblöcken des vorbestimmten Typs in dem FlexE-Verkehrszeitschlitz extrahiert; und
ein Erfassungsmodul (42), das so konfiguriert ist, dass es entsprechend dem extrahierten Informationsinhalt den vorbestimmten Client-Verkehrsfluss erfasst;
wobei das Abgabemodul (32) so konfiguriert ist, dass es den eingekapselten vorbestimmten Client-Verkehrsfluss in alle oder einen Teil der letzten sieben Bytes jedes der Steuerinformationsblöcke des vorbestimmten Typs in dem FlexE-Verkehrszeitschlitz einfügt; und jeder der Steuerinformationsblöcke des vorbestimmten Typs ein Leerlaufinformationsblock ist, in dem der Inhalt eines ersten Bytes 0x1E ist.

## Revendications

1. Procédé d'acheminement d'un flux de trafic dans un protocole Flex Ethernet, FlexE, comprenant:
l'encapsulation (110), par une extrémité émettrice, d'un flux de trafic client prédéterminé; et l'insertion (120), par l'extrémité émettrice, du flux de trafic client prédéterminé encapsulé dans cinq blocs d'informations de contrôle de type prédéterminé dans un intervalle de temps de trafic FlexE, et l'envoi des blocs d'informations de contrôle de type prédéterminé; dans lequel l'insertion, par l'extrémité émettrice, du flux de trafic client prédéterminé encapsulé dans les blocs d'informations de contrôle de type prédéterminé dans l'intervalle de temps du trafic FlexE comprend:
l'insertion, par la partie émettrice, du flux de trafic client prédéterminé encapsulé dans tout ou partie des sept derniers octets de chacun des blocs d'informations de contrôle de type prédéterminé dans l'intervalle de temps du trafic FlexE; et chacun des blocs d'informations de contrôle de type prédéterminé est un bloc d'informations de repos dans lequel le contenu d'un premier octet est 0x1E.

2. Procédé de la revendication 1, dans lequel le flux de trafic client prédéterminé est un flux de trafic client ayant la priorité la plus basse.

3. Procédé de la revendication 1 ou 2, dans lequel l'insertion, par l'extrémité émettrice, du flux de trafic client prédéterminé encapsulé dans les blocs d'information de contrôle de type prédéterminé dans l'intervalle de temps du trafic FlexE, comprend:
l'ajustement, par l'extrémité émettrice, d'une vitesse du flux de trafic client prédéterminé encapsulé en fonction d'un nombre de blocs d'informations de contrôle de type prédéterminé dans l'intervalle de temps du trafic FlexE en unité de temps; et
insérer, par l'émetteur, le flux de trafic client prédéterminé encapsulé après l'ajustement de la vitesse dans les blocs d'information de contrôle de type prédéterminé dans le créneau horaire du trafic FlexE.

4. Procédé de la revendication 3, dans lequel l'ajustement de la vitesse du flux de trafic client prédéterminé encapsulé comprend:
l'ajustement de la vitesse du flux de trafic client prédéterminé encapsulé par l'insertion d'informations d'inactivité dans le flux de trafic client prédéterminé encapsulé.

5. Le procédé de la revendication 1, dans lequel l'insertion, par l'extrémité d'envoi, du flux de trafic client prédéterminé encapsulé dans les blocs d'information de contrôle de type prédéterminé dans le créneau horaire du trafic FlexE comprend:
déterminer, par l'extrémité émettrice, les intervalles de temps transportant le flux de trafic client prédéterminé dans l'intervalle de temps du trafic FlexE;
déterminer, par l'émetteur, si les blocs d'informations de contrôle dans les intervalles de temps transportant le flux de trafic client prédéterminé sont les blocs d'informations de contrôle de type prédéterminé; et en réponse à la détermination que les blocs d'informations de contrôle dans les intervalles de temps transportant le flux de trafic client prédéterminé sont les blocs d'informations de contrôle de type prédéterminé, insérer, par l'émetteur, le flux de trafic client prédéterminé encapsulé dans les blocs d'informations de contrôle de type prédéterminé.

6. Procédé de la revendication 5, dans lequel les créneaux horaires transportant le flux de trafic client prédéterminé sont des créneaux horaires d'un ou de plusieurs membres FlexE;
dans lequel, si le flux de trafic client prédéterminé a un seul flux, le flux de trafic client prédéterminé encapsulé est transporté sur tout ou partie des intervalles de temps; et si le flux de trafic client prédéterminé a plusieurs flux, le flux de trafic client prédéterminé encapsulé est transporté sur différents intervalles de temps.

7. Procédé de la revendication 1,
dans lequel, parmi les sept derniers octets de chacun des blocs d'informations de contrôle de type prédéterminé, un octet utilisé pour insérer le flux de trafic client prédéterminé encapsulé est déterminé en fonction des types de blocs d'informations de contrôle.

8. Procédé de fourniture d'un flux de trafic dans un protocole Flex Ethernet, FlexE, comprenant:
l'extraction (210), par une extrémité réceptrice, d'informations contenues dans des blocs d'informations de contrôle de type prédéterminé dans un intervalle de temps de trafic FlexE; et l'acquisition (220), par l'extrémité réceptrice, d'un flux de trafic client prédéterminé en fonction du contenu d'information extrait; dans lequel le flux de trafic client prédéterminé est inséré par une extrémité émettrice dans tout ou partie des sept derniers octets de chacun des blocs d'informations de contrôle de type prédéterminé dans le créneau horaire du trafic FlexE; et chacun des blocs d'informations de contrôle de type prédéterminé est un bloc d'informations au repos dans lequel le contenu d'un premier octet est 0x1E.

9. Procédé de la revendication 8, dans lequel le flux de trafic client prédéterminé est un flux de trafic client ayant la priorité la plus basse.

10. Procédé de la revendication 8 ou 9, dans lequel l'acquisition, par l'extrémité réceptrice, du flux de trafic client prédéterminé en fonction du contenu d'information extrait comprend:
la décapsulation, par l'extrémité réceptrice, du contenu d'information, et l'épissage du contenu d'information décapsulé en fonction d'un identifiant du flux de trafic client prédéterminé afin d'obtenir au moins un flux de trafic client prédéterminé; Dans lequel, avant la décapsulation, par l'extrémité réceptrice, du contenu d'information, le procédé comprend en outre:
l'élimination, par l'extrémité réceptrice, des informations inactives insérées dans le flux de trafic client prédéterminé.

11. Procédé de la revendication 8, dans lequel l'extraction, par l'extrémité réceptrice, du contenu d'information dans les blocs d'information de contrôle de type prédéterminés dans le créneau horaire du trafic FlexE comprend:
déterminer, par l'extrémité réceptrice, les intervalles de temps transportant le flux de trafic client prédéterminé dans l'intervalle de temps du trafic FlexE;
déterminer, par l'extrémité réceptrice, si un bloc d'informations de contrôle dans les intervalles de temps transportant le flux de trafic client prédéterminé est le type prédéterminé de blocs d'informations de contrôle;
et extraire, par l'extrémité réceptrice, le contenu informatif des blocs d'informations de contrôle de type prédéterminé en réponse à la détermination que le bloc d'informations de contrôle dans les créneaux horaires transportant le flux de trafic client prédéterminé est le bloc d'informations de contrôle de type prédéterminé.

12. Procédé de la revendication 11, dans lequel les intervalles de temps transportant le flux de trafic client prédéterminé sont des intervalles de temps d'un ou de plusieurs membres FlexE;
dans lequel, à condition que le flux de trafic client prédéterminé ait un flux unique, le flux de trafic client prédéterminé encapsulé est transporté sur tout ou partie des intervalles de temps; et si le flux de trafic client prédéterminé comporte plusieurs flux, le flux de trafic client prédéterminé encapsulé est acheminé sur différents intervalles de temps.

13. Procédé de la revendication 8, dans lequel l'extraction, par l'extrémité réceptrice, du contenu d'information dans chacun des blocs d'information de contrôle de type prédéterminé dans l'intervalle de temps du trafic FlexE comprend:
l'extraction, par l'extrémité réceptrice, du contenu informatif de tout ou partie des sept derniers octets de chacun des blocs d'informations de contrôle de type prédéterminé dans le créneau horaire du trafic FlexE;
dans lequel, dans les blocs d'informations de contrôle de type prédéterminé, un octet utilisé pour extraire le contenu informatif est déterminé en fonction d'un type de bloc d'informations de contrôle.

14. Appareil pour délivrer un flux de trafic dans un protocole Flex Ethernet, FlexE, comprenant:
un module d'encapsulation (31), qui est configuré pour encapsuler un flux de trafic client prédéterminé;
un module de distribution (32), configuré pour insérer le flux de trafic client prédéterminé encapsulé dans des blocs d'informations de contrôle de type prédéterminé dans un intervalle de temps de trafic FlexE, et pour envoyer les blocs d'informations de contrôle de type prédéterminé;
un module d'extraction (41), configuré pour extraire les informations contenues dans les blocs d'informations de contrôle de type prédéterminé dans le créneau horaire du trafic FlexE; et
un module d'acquisition (42), configuré pour acquérir, en fonction du contenu d'information extrait, le flux de trafic client prédéterminé;
dans lequel le module de distribution (32) est configuré pour insérer le flux de trafic client prédéterminé encapsulé dans tout ou partie des sept derniers octets de chacun des blocs d'information de contrôle de type prédéterminé dans le créneau horaire du trafic FlexE; et
chacun des blocs d'information de contrôle de type prédéterminé est un bloc d'information de repos dans lequel le contenu d'un premier octet est 0x1E.
